# EUROPÄISCHE PATENTSCHRIFT

(11) **EP 0 983 882 B1**
(45) Veröffentlichungstag und Bekanntmachung des Hinweises auf die Patenterteilung: **26.10.2005**
(21) Anmeldenummer: 99116147.2
(22) Anmeldetag: 19.08.1999
(51) Int. Cl.: B60G 17/04, B60G 17/052

(54) **Anordnung zur Druckmittel-Verbindung insbesondere eines Fahrzeug-Federbeins mit einer Druckversorgungseinheit**
Arrangement for a pressurised fluid connection especially between a vehicle suspension strut and a pressure supply
Ensemble pour une connection de fluide sous pression en particulier entre une jambe de suspension de véhicule et une source de pression

(30) Priorität: 27.08.1998 DE 29815404 U
(43) Veröffentlichungstag der Anmeldung: 08.03.2000
(73) Patentinhaber: Voss Automotive GmbH, 51688 Wipperfürth (DE)
(72) Erfinder: Borgmeier, Olav, 42499 Hückeswagen (DE)
(74) Vertreter: Patentanwälte Dr. Solf & Zapf

(56) Entgegenhaltungen:
- EP-A- 0 302 630
- EP-A- 0 767 080
- EP-A- 0 918 156

## Beschreibung

Die vorliegende Erfindung betrifft eine Anordnung zum Verbinden von Druckleitungen gemäß dem Oberbegriff des Patentanspruchs 1, insbesondere zum pneumatischen Verbinden eines Fahrzeug-Federbeins mit einer Druckversorgungseinheit über ein als Übergangsstück an einem Halteteil des Federbeins befestigbares Verbinderelement, siehe zum Beispiel EP-A-767080.

Bei solchen bekannten Verbindungsanordnungen werden meist Verbinderelemente aus Metall, z. B. Messing, verwendet. Diese Verbinderelemente werden in der Regel mit dem Halteteil verschraubt oder durch spezielle Klammerelemente gehalten. Dies führt zu einer technisch aufwändigen Herstellung und Montage der Verbinderelemente.

Das ältere, aber nachveröffentlichte und somit Stand der Technik gemäß Art. 54 (3) EPÜ bildende Dokument EP 0 918 156 A1 beschreibt ein einstückig aus Kunststoff bestehendes Verbinderelement für Kraftstoffleitungen eines Verbrennungsmotors. Dieses Verbinderelement kann zur Verbindung mit einem Druckaggregat, und zwar mit einer Einspritzanlage, verrastet werden. Dazu weist das Verbinderelement zwei elastisch verformbare Haltearme auf, die einen Verbindungskörper der Einspritranlage rastend übergreifen. Dabei wird gleichzeitig zur Fluidverbindung ein Steckabschnitt des Verbinderelementes in eine Stecköffnung des Verbindungskörpers eingesteckt.

Der vorliegenden Erfindung liegt die Aufgabe zugrunde, bei einer Anordnung der gattungsgemäßen Art die Herstellung und Montage des Verbinderelementes wesentlich zu vereinfachen.

Erfindungsgemäß wird dies durch die Merkmale des Patentanspruchs 1 erreicht. Vorteilhafte Ausgestaltungsmerkmale der Erfindung sind in den abhängigen Ansprüchen enthalten.

Demnach ist das Verbinderelement als einstückiges Formteil aus Kunststoff gebildet und zur Halterung mit dem Halteteil verrastbar. Hierdurch läßt sich das Verbinderelement als Massenteil sehr wirtschaftlich im Spritzgußverfahren herstellen. Die erfindungsgemäße Rastverbindung gestattet eine besonders schnelle und wirtschaftliche, vorzugsweise automatisierte Montage. Insofern führt die Erfindung gerade im Hinblick darauf zu gravierenden Vorteilen, dass es sich im Automobilbau um eine Massenproduktion handelt.

Das Verbinderelement fungiert praktisch als Übergangsstück zwischen einer zur Druckversorgungseinheit (DVE) führenden Druckleitung und einer weiter zum Federbein führenden Druckleitung. Bei Federbeinen im Bereich einer Fahrzeug-Vorderachse kommt es bedingt durch Lenkungsbewegungen zu relativen Drehbewegungen zwischen dem Federbein selbst und dem ortsfesten Halteteil. Deshalb muß die Druckleitung zwischen dem ortsfest gehalterten Verbinderelement und dem dazu relativ verdrehbaren Federbein entsprechend flexibel ausgelegt sein. Zweckmäßigerweise handelt es sich um eine relativ formstabile, aus Kunststoff formgebogene Rohrleitung, die zwischen ihrem ersten, mit dem Verbinderelement verbundenen Ende und ihrem zweiten, mit dem Federbein verbundenen Ende einen kreisförmigen, zur Federbein-Längsachse koaxialen Verlauf mit einem Umschlingungswinkel vorzugsweise im Bereich zwischen 360° und 720° aufweist. Die beschriebenen relativen Drehbewegungen sind dann problemlos möglich, indem sich die Rohrleitung aufgrund ihres wendelförmigen Verlaufes elastisch aufweiten bzw. verengen kann. Die hierbei auftretenden, in Umfangsrichtung wirkenden Kräfte werden von dem erfindungsgemäßen Verbinderelement aufgenommen bzw. abgestützt, indem erfindungsgemäß die Rastverbindung zwischen dem Verbinderelement und dem Halteteil zumindest in dieser Richtung im Wesentlichen spielfrei ausgelegt ist.

Weitere vorteilhafte Ausgestaltungsmerkmale der Erfindung sind in den Unteransprüchen sowie der folgenden Beschreibung enthalten.

Anhand eines in den Zeichnungen veranschaulichten, bevorzugten Ausführungs- und Anwendungsbeispiels soll die Erfindung näher erläutert werden. Dabei zeigen:
- Fig. 1: eine seitliche Draufsicht auf einen Teilbereich eines Halteteils mit einem montierten erfindungsgemäßen Verbinderelement,
- Fig. 2: eine Perspektivansicht des Bereichs gemäß Fig. 1 in einer Situation während der Montage (oder Demontage) des Verbinderelementes,
- Fig. 3: eine Seitenansicht wie in Fig. 1 während der Montage entsprechend Fig. 2,
- Fig. 4: eine Schnittansicht in der Ebene IV-IV gemäß Fig. 1,
- Fig. 5: eine weitere Seitenansicht wie in Fig. 1, allerdings ohne Darstellung des Verbinderelementes,
- Fig. 6: eine vergrößerte Perspektivansicht (nur) des Verbinderelementes aus anderem Blickwinkel,
- Fig. 7: einen stark vergrößerten Schnitt in der Ebene VII-VII gemäß Fig. 1,
- Fig. 8: eine Ansicht des Verbinderelementes in Pfeilrichtung VIII gemäß Fig. 1 ohne Halteteil, jedoch mit einer angeschlossenen Rohrleitung zur Verbindung mit einem Federbein, und
- Fig. 9: eine Ansicht in Pfeilrichtung IX gemäß Fig. 8.

In den verschiedenen Figuren der Zeichnungen sind gleiche Teile stets mit den gleichen Bezugszeichen versehen und brauchen deshalb in der Regel auch jeweils nur einmal beschrieben zu werden.

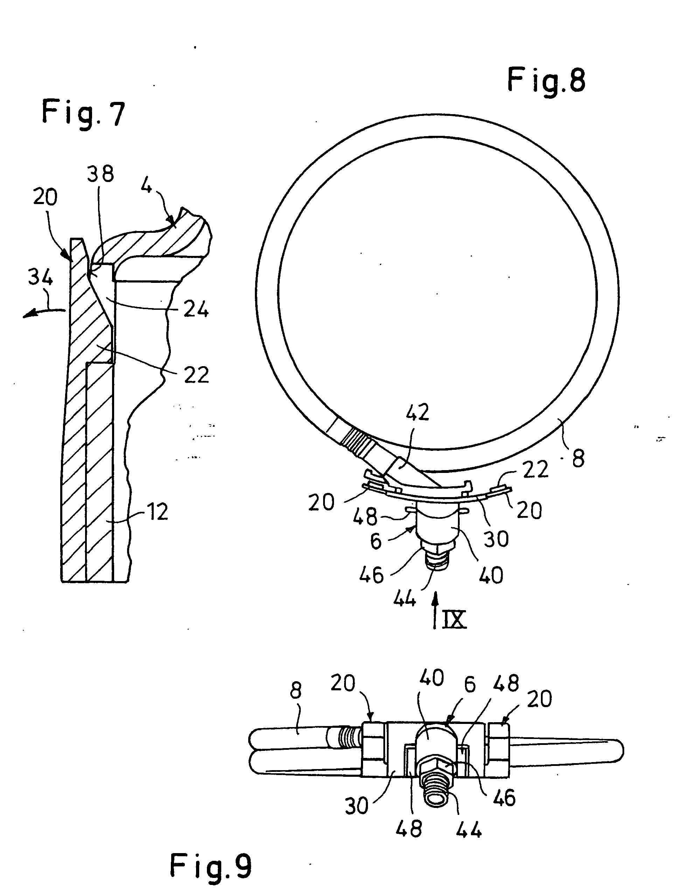

Die Erfindung findet insbesondere bei einem - selbst nicht dargestellten - Fahrzeug-Federbein Anwendung. Es handelt sich insbesondere um ein Luft-Federbein; es kann aber auch hydropneumatisch arbeiten. Ein solches Federbein muß über eine Druckmittelverbindung mit einer nicht dargestellten Druckversorgungseinheit (DVE), vorzugsweise Luftversorgungseinheit (LVE), verbunden werden. Hierzu ist an einem im Fahrzeug ortsfest zu montierenden Halteteil 4 des Federbeins ein Verbinderelement 6 befestigbar. Dieses Verbinderelement 6 dient als Übergangsstück zwischen einer zum Federbein führenden Rohrleitung 8 (siehe Fig. 8 und 9) und einer nicht dargestellten, zur DVE führenden Druckleitung. Die Verbindung der Rohrleitung 8 mit dem Federbein ist nicht Gegenstand der vorliegenden Erfindung und wird deshalb auch nicht dargestellt und beschrieben.

Statt dessen bezieht sich die Erfindung speziell auf das Verbinderelement 6, und zwar ist erfindungsgemäß das Verbinderelement 6 als einstückiges Formteil aus Kunststoff gebildet und zur Halterung mit dem Halteteil 4 über eine Rastverbindung verbindbar.

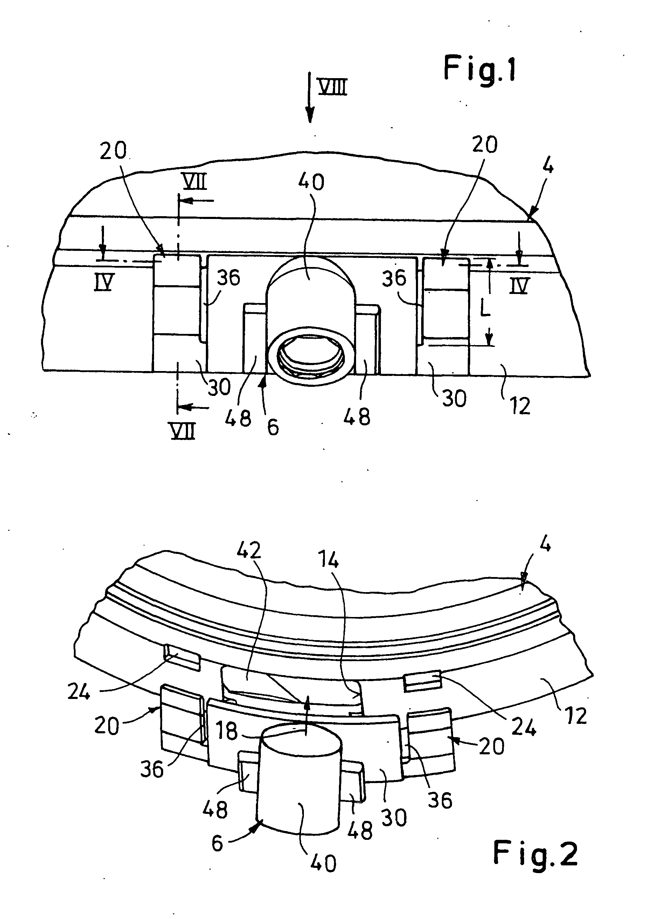

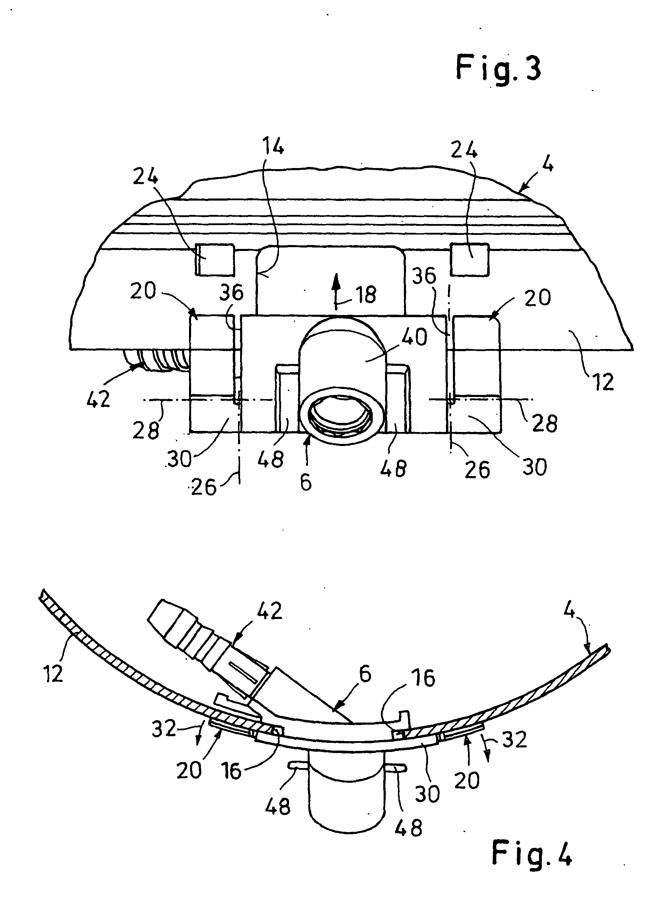

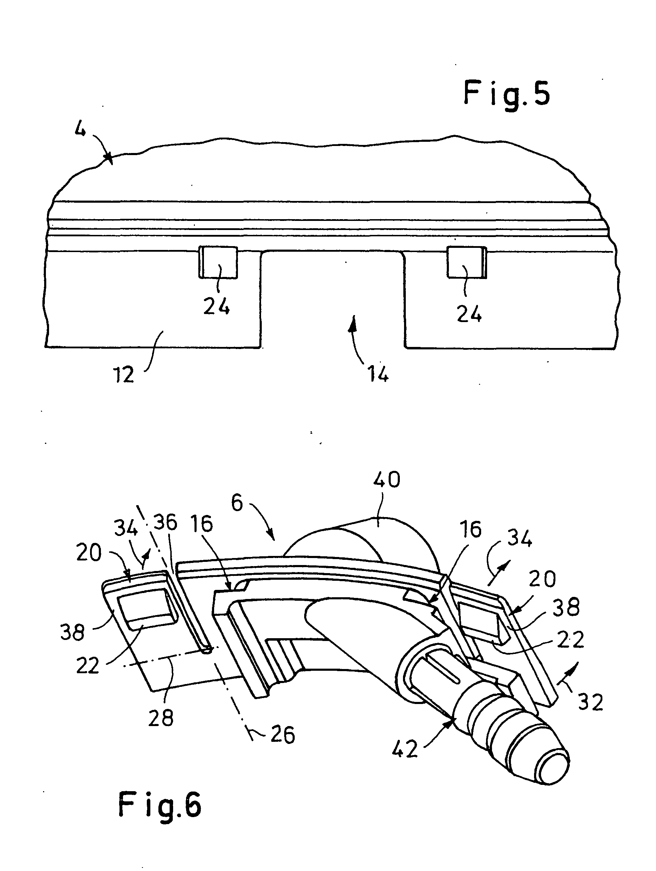

Das Halteteil 4 ist in der Regel kappenartig mit einer kreisbogenförmig gekrümmten, insbesondere hohlzylindrischen und zur Längsachse des Federbeins koaxialen Wandung 12 (sogenannte Schott-Wandung) ausgebildet. Diese Wandung 12 weist eine zu einer freien Axialseite hin randoffene Ausnehmung 14 zur Aufnahme des Verbinderelementes 6 auf. Im dargestellten Ausführungsbeispiel ist die Ausnehmung 14 im wesentlichen rechteckig ausgebildet (siehe hierzu vor allem Fig. 5). Das Verbinderelement 6 weist mindestens einen entsprechend der Kontur der Ausnehmung 14 verlaufenden Aufnahmespalt 16 (siehe insbesondere Fig. 4 und 6) derart auf, daß das Verbinderelement 6 in einer zur Federbein-Längsachse parallelen Einschubrichtung (siehe den Pfeil 18 in Fig. 2 bzw. 3) in die Ausnehmung 14 einschiebbar ist und im eingeschobenen Zustand der Öffnungsrand der Ausnehmung 14 in dem Aufnahmespalt 16 des Verbinderelementes 6 sitzt (siehe Fig. 4). Hierdurch wird vorteilhafterweise die Ausnehmung 14 von dem Verbinderelement 6 im Grunde verschlossen, so daß in diesem Bereich eine gewisse Schmutzabdichtung gewährleistet ist.

Zur festen und sicheren Halterung in seinem eingeschobenen Zustand weist das Verbinderelement 6 zwei seitliche, federelastische Rastarme 20 auf, die im eingeschobenen, in der Ausnehmung 14 sitzenden Zustand mit Rastnasen 22 (Fig. 6) derart in neben der Ausnehmung 14 angeordnete Rastöffnungen 24 der Wandung 12 eingreifen, daß in Löserichtung ein Formschluß gewährleistet ist (siehe Fig. 7).

In einer vorteilhaften Ausgestaltung der Erfindung ist jeder Rastarm 20 um zwei zueinander winklig, insbesondere etwa rechtwinklig angeordnete Biegeachsen 26 und 28 elastisch verformbar (Fig. 3). Hierzu ist jeder Rastarm 20 mit dem Verbinderelement 6 quer zur Einschubrichtung 18 gesehen, über einen an die Umfangskontur der Wandung 12 des Halteteils 4 angepaßten Wandungsabschnitt 30 verbunden, wobei dieser Wandungsabschnitt 30 elastisch um eine erste, etwa parallel zur Federbein-Längsachse verlaufende Biegeachse 26 verformbar ist. Hierzu wird vor allem auf die Fig. 4 verwiesen, wobei die Biegerichtung durch Pfeile 32 veranschaulicht ist. Im Anschluß an den jeweiligen Wandungsabschnitt 30 erstreckt sich dann jeder Rastarm 20 derart etwa parallel zur Längsachse in Einschubrichtung 18, daß er elastisch um eine zweite, zur Wandung 12 des Halteteils 4 etwa tangential verlaufende Biegeachse 28 verformbar ist. Diese Biegung ist in Fig. 6 und 7 durch Pfeile 34 veranschaulicht. Durch diese vorteilhafte Maßnahme wird erreicht, daß die Rastarme 20 selbst mit einer relativ kurzen axialen Länge L (Fig. 1) ausgebildet sein können, wodurch sie eine relativ hohe Steifigkeit in Umfangsrichtung bzw. Tangentialrichtung besitzen. Hierdurch können die Rastarme 20 durch ein im wesentlichen spielfreies Eingreifen der Rastnasen 22 in die Rastöffnungen 24 in Umfangsrichtung wirkende Kräfte aufnehmen, wodurch stets ein ebener Abschluß an der Unterkante des Halteteils 4 mit dem Verbindungselement 6 gewährleistet wird. Eine Spielfreiheit durch geringe Fertigungstoleranzen kann im Bereich der Rastnasen 22 und Rastöffnungen 24 leichter gewährleistet werden, als im Bereich der Ausnehmung 14.

Es sei noch erwähnt, daß zwischen jedem Rastarm 20 und dem übrigen Verbinderelement 6 ein schmaler Schlitz 36 gebildet ist. Außerdem kann der Wandungsabschnitt 30 vor allem an seinem auf der Öffnungsseite der Ausnehmung 14 liegenden Rand eine nicht dargestellte Verstärkung aufweisen, die als randliche Verdickung oder Steg- bzw. Rippenkontur insbesondere auf der konvexen Außenseite ausgeführt werden kann. Damit kann das Federverhalten der Rastarme 20 insbesondere im Sinne einer Erhöhung der Rast-Haltekraft beeinflußt werden. Außerdem wird ein guter und mechanisch haltbarer Abschluß der Ausnehmung 14 im freien Randbereich der Wandung 2 gewährleistet.

In weiterer vorteilhafter Ausgestaltung der Erfindung ist vorgesehen, daß jeder Rastarm 20 einen die Rastnase 22 umschließenden Dichtbereich 38 (siehe Fig. 6) aufweist, der im verrasteten Zustand so zur Anlage an der Wandung 12 des Halteteils 4 gelangt, daß im Bereich der Rastöffnungen 24 ebenfalls eine Schmutzdichtung gewährleistet ist (vgl. auch Fig. 7).

Das als Übergangsstück fungierende Verbinderelement 6 weist auf der Außenseite des Halteteils 4 ein Kuppelstück 40 einer grundsätzlich beliebigen Leitungskupplung sowie auf der Innenseite ein Anschlußelement 42 für die zum Federbein führenden Rohrleitung 8 auf (Fig. 8, 9). Der stutzenartige Anschlußelement 42 weist bevorzugt ein sogenanntes Dornprofil auf (Fig. 6). Das Kuppelstück 40 ist vorzugsweise Teil einer Steckkupplung und z. B. als Muffenteil ausgebildet, in das ein nicht dargestelltes Steckerteil einsteckbar ist. Es kann auch ein zusätzliches Einschraubstück 46 (Überwurfschraube) ggf. mit einem Montage-Schutzelement 44 vorgesehen sein (Fig. 8 und 9), praktisch als Adapter zwischen dem ein Innengewinde aufweisenden Kuppelstück 40 und dem Steckerteil. Das Schutzelement 44 schützt vor Eindringen von Schmutz und dergleichen, solange noch kein Stecker gesteckt ist; es wird vor dem Stecker entfernt. Das Kuppelstück 40 kann aber auch beispielsweise direkt als Teil einer Schraubkupplung ausgebildet sein. Aufgrund des bevorzugt kreisförmigen Verlaufs der Rohrleitung 8 (Fig. 8) erstreckt sich das Anschlußelement 42 des Verbinderelementes 6 etwa tangential zum Verlauf der Rohrleitung 8 in den Innenbereich des Halteteils 4; siehe insbesondere Fig. 4.

In weiterer vorteilhafter Ausgestaltung weist das Verbinderelement 6 mindestens ein Widerlagerelement 48 auf. Im dargestellten, bevorzugten Ausführungsbeispiel handelt es sich um zwei stegartige, seitlich vom Kuppelstück 40 abstehende Widerlagerlemente 48. Diese dienen zum vorübergehenden Fixieren, d. h. Festhalten des Verbinderelementes 6 bei der Montage von Anschlußteilen, um unerwünschte Krafteinwirkungen auf das Verbinderelement 6 zu verhindern. Dies ist z. B. der Fall, wenn ein Einschraubteil, z. B. das Einschraubstück 46, in das Kuppelstück 40 eingeschraubt wird, und/oder wenn zur Druckprüfung eine Prüfleitung (sogenannter Druckprüfrüssel) befestigt werden muß.

## Patentansprüche

1. Anordnung zum - insbesondere pneumatischen - Verbinden einer zu einem Druckaggregat, insbesondere zu einem Fahrzeug-Federbein, führenden Druckleitung mit einer zu einer Druckversorgungseinheit führenden Druckleitung, mit einem als Übergangsstück mit den beiden Druckleitungen zu verbindenden und an einem eine Wandung (12) aufweisenden Halteteil (4) des Druckaggregates bzw. Federbeins befestigbaren Verbinderelement (6),
**dadurch gekennzeichnet, dass** das Verbinderelement (6) als einstückiges Formteil aus Kunststoff gebildet und zur Halterung mit dem Halteteil (4) verrastbar ist, wobei das Verbinderelement (6) in eine randoffene Ausnehmung (14) der Wandung (12) des Halteteils (4) einsetzbar ist und dazu mindestens einen entsprechend der Kontur der Ausnehmung (14) der Wandung (12) des Halteteils (4) verlaufenden Aufnahmespalt (16) derart aufweist, dass das Verbinderelement (6) in die Ausnehmung (14) einschiebbar ist und im eingeschobenen Zustand der Öffnungsrand der Ausnehmung (14) in dem Aufnahmespalt (16) des Verbinderelementes (6) sitzt.

2. Anordnung nach Anspruch 1,
**dadurch gekennzeichnet, dass** das Verbinderelement (6) zum Einsetzen in die randoffene Ausnehmung (14) der gekrümmt, insbesondere hohlzylindrisch ausgebildeten Wandung (12) des Halteteils (4) ausgelegt ist.

3. Anordnung nach Anspruch 1 oder 2,
**dadurch gekennzeichnet, dass** dasVerbinderelement(6)in einer zur Längsachse des Federbeins parallel verlaufenden Einschubrichtung (18) in die Ausnehmung (14) einschiebbar ist.

4. Anordnung nach einem der Ansprüche 1 bis 3,
**dadurch gekennzeichnet,**
**daß** das Verbinderelement (6) zwei seitliche, federelastische Rastarme (20) aufweist, die im eingeschobenen, in der Ausnehmung (14) sitzenden Zustand mit Rastnasen (22) in neben der Ausnehmung (14) angeordnete Rastöffnungen (24) der Wandung (12) des Halteteils (4) eingreifen.

5. Anordnung nach Anspruch 4,
**dadurch gekennzeichnet,**
**daß** jeder Rastarm (20) um zwei zueinander winklig, insbesondere etwa rechtwinklig angeordnete Biegeachsen (26, 28) elastisch verformbar ist.

6. Anordnung nach Anspruch 4 oder 5,
**dadurch gekennzeichnet,**
**daß** jeder Rastarm (20) mit dem Verbinderelement (6) quer zur Einschubrichtung (18) über einen an die Umfangskontur der Wandung (12) des Halteteils (4) angepaßten, elastisch um eine erste, etwa parallel zur Längsachse verlaufende Biegeachse (26) verformbaren Wandungsabschnitt (30) verbunden ist.

7. Anordnung nach Anspruch 6,
**dadurch gekennzeichnet,**
**daß** der die randoffene Ausnehmung (14) der Wandung (12) des Halteteils (4) im eingesetzten Zustand im wesentlichen verschließende Wandungsabschnitt (30) insbesondere auf seiner konvexen, an die Krümmung der Wandung (12) angepaßten Außenseite steg- oder rippenartige Verstärkungen aufweist.

8. Anordnung nach Anspruch 6 oder 7,
**dadurch gekennzeichnet,**
**daß** sich jeder Rastarm (20) im Anschluß an den zugehörigen Wandungsabschnitt derart etwa parallel zur Längsachse und insbesondere in Einschubrichtung (18) erstreckt, daß er elastisch um eine zweite, zur Wandung (12) des Halteteils (4) etwa tangential verlaufende Biegeachse (28) verformbar ist.

9. Anordnung nach einem der Ansprüche 4 bis 8,
**dadurch gekennzeichnet,**
**daß** jeder Rastarm (20) einen die am freien Ende angeordnete Rastnase (22) umschließenden Dichtbereich (38) aufweist, der im mit dem Halteteil (4) verrasteten Zustand so zur Anlage an der Wandung (12) des Halteteils (4) gelangt, daß im Bereich der Rastöffnungen (24) eine Schmutzdichtung gewährleistet ist.

10. Anordnung nach einem der Ansprüche 1 bis 9,
**dadurch gekennzeichnet,**
**daß** das Verbinderelement (6) auf der Außenseite des Halteteils (4) ein Kuppelstück (40) einer Leitungskupplung sowie auf der Innenseite ein Anschlußelement (42) für eine zu dem Federbein führende Rohrleitung (8) aufweist.

11. Anordnung nach Anspruch 10,
**dadurch gekennzeichnet,**
**daß** die Rohrleitung (8) zwischen ihrem ersten, mit dem Verbinderelement (6) zu verbindenden Ende und ihrem zweiten, zu dem Federbein führenden Ende einen kreisförmigen, zur Federbein-Längsachse koaxialen Verlauf mit einem Umschlingungswinkel vorzugsweise im Bereich zwischen 360° und 720° aufweist.

12. Anordnung nach Anspruch 10 oder 11,
**dadurch gekennzeichnet,**
**daß** das Anschlußelement (42) des Verbinderelementes (6) sich etwa tangential zu dem kreisförmigen Verlauf der Rohrleitung (8) in den Innenbereich des Halteteils (4) erstreckt.

13. Anordnung nach einem der Ansprüche 1 bis 12,
**dadurch gekennzeichnet,**
**daß** die Verbindung zwischen dem Halteteil (4) und dem Verbinderelement (6) insbesondere in Umfangsrichtung der Wandung (12) im wesentlichen spielfrei ist.

14. Anordnung nach einem der Ansprüche 1 bis 13,
**dadurch gekennzeichnet,**
**daß** das Verbinderelement (6) mindestens ein Widerlagerelement (48) zum vorübergehenden zusätzlichen mechanischen Fixieren bzw. Festhalten während bestimmter, das Verbinderelement (6) mit einer Kraft beaufschlagender Vorgänge aufweist.

## Claims

1. Arrangement for the connection, in particular pneumatic connection, of a pressurized line, leading to a pressurized unit, in particular to a spring strut of a vehicle, to a pressurized line leading to a pressure supply unit, having a connector element (6), which can be connected to the two pressurized lines as a transition piece and can be fastened to a holding part (4), which has a wall (12), of the pressurized unit or spring strut, **characterized in that** the connector element (6) is formed as a one-piece plastic moulding and, for the purpose of retention, can be latched to the holding part (4), it being possible for the connector element (6) to be fitted into an open-edged aperture (14) in the wall (12) of the holding part (4), and for this purpose the connector element (6) having at least one receiving gap (16), which follows the contour of the aperture (14) in the wall (12) of the holding part (4), such that the connector element (6) can be inserted into the aperture (14) and, in the inserted state, the open edge of the aperture (14) is seated in the receiving gap (16) of the connector element (6).

2. Arrangement according to Claim 1, **characterized in that** the connector element (6) is designed to be inserted into the open-edged aperture (14) in the curved, in particular hollow-cylindrical, wall (12) of the holding part (4).

3. Arrangement according to Claim 1 or 2, **characterized in that** the connector element (6) can be inserted into the aperture (14) in a direction of insertion (18) parallel to the longitudinal axis of the spring strut.

4. Arrangement according to one of Claims 1 to 3, **characterized in that** the connector element (6) has two lateral, resilient latching arms (20) which, in the inserted state, in which they are seated in the aperture (14), engage by means of latching projections (22) in latching openings (24) in the wall (12) of the holding part (4), the said openings being arranged next to the aperture (14).

5. Arrangement according to Claim 4, **characterized in that** each latching arm (20) can be deformed elastically about two bending axes (26, 28) arranged at an angle to one another, in particular approximately at right angles.

6. Arrangement according to Claim 4 or 5, **characterized in that** each latching arm (20) is connected to the connector element (6) transversely to the direction of insertion (18) by a wall portion (30) which is matched to the circumferential contour of the wall (12) of the holding part (4) and can be deformed elastically about a first bending axis (26), which extends approximately parallel to the longitudinal axis.

7. Arrangement according to Claim 6, **characterized in that** the wall portion (30), which essentially closes the open-edged aperture (14) in the wall (12) of the holding part (4) in the inserted state, has ridge or rib-type reinforcements, in particular on its convex outer side, which is matched to the curvature of the wall (12).

8. Arrangement according to Claim 6 or 7, **characterized in that**, adjoining the associated wall portion, each latching arm (20) extends approximately parallel to the longitudinal axis and, in particular, in the direction of insertion (18) in such a way that it can be deformed elastically about a second bending axis (28), which extends approximately tangentially to the wall (12) of the holding part (4).

9. Arrangement according to one of Claims 4 to 8, **characterized in that** each latching arm (20) has a sealing region (38) which surrounds the latching projection (22) arranged at the free end and comes to rest in such a way against the wall (12) of the holding part (4), in the state in which it is latched to the holding part (4), that a dirt seal is ensured in the region of the latching openings (24).

10. Arrangement according to one of Claims 1 to 9, **characterized in that**, on the outer side of the holding part (4), the connector element (6) has a coupling piece (40) of a line coupling and, on the inner side, has a connection element (42) for a pipe conduit (8) leading to the spring strut.

11. Arrangement according to Claim 10, **characterized in that**, between its first end, the end to be connected to the connector element (6), and its second end, the end leading to the spring strut, the pipe conduit (8) follows a circular path coaxial with the longitudinal axis of the spring strut and preferably having an angle of wrap in the range between 360° and 720°.

12. Arrangement according to Claim 10 or 11, **characterized in that** the connection element (42) of the connector element (6) extends into the interior of the holding part (4) approximately tangentially to the circular path of the pipe conduit (8).

13. Arrangement according to one of Claims 1 to 12, **characterized in that** the connection between the holding part (4) and the connector element (6) is essentially free from play, especially in the circumferential direction of the wall (12).

14. Arrangement according to one of Claims 1 to 13, **characterized in that** the connector element (6) has at least one abutment element (48) for temporary additional mechanical fixing or securing during certain operations which impose a force on the connector element (6).

## Revendications

1. Dispositif destiné à établir une liaison - en particulier pneumatique - entre une conduite sous pression menant vers un appareil à pression, en particulier une jambe de suspension d'un véhicule automobile, et une conduite sous pression menant vers une unité d'alimentation en pression, comportant un élément de raccordement (6), formant une pièce de liaison reliant les deux conduites sous pression et pouvant être fixé sur une partie de support (4) de l'appareil à pression ou jambe de suspension, munie d'une paroi (12), **caractérisé en ce que** l'élément de raccordement (6) peut être conçu sous forme de pièce moulée en matière plastique d'un seul tenant et peut être encliqueté avec la pièce de support (4) pour fournir un support, l'élément de raccordement (6) pouvant être introduit dans un évidement (14) de la paroi (12) de la pièce de support (4) et comportant à cet effet au moins une fente de logement (16) s'étendant conformément au contour de l'évidement (14) dans la paroi (12) de la partie de support (4), de telle sorte que l'élément de raccordement (6) peut être inséré dans l'évidement (14) et, dans la position insérée, le bord d'ouverture de l'évidement (14) est logé dans la fente de logement (16) de l'élément de raccordement (6).

2. Dispositif selon la revendication 1,
**caractérisé en ce que** l'élément de raccordement (6) peut être emboîté dans un évidement (14), à bord ouvert d'une paroi courbe (12), en particulier cylindrique creuse, de la partie de support (4).

3. Dispositif selon la revendication 1 ou 2, **caractérisé en ce que** l'élément de raccordement (6) peut être inséré dans l'évidement (14) dans une direction d'introduction (18) parallèle à l'axe longitudinal de la jambe de suspension.

4. Dispositif selon l'une quelconque des revendications 1 à 3,
**caractérisé en ce que** l'élément de raccordement (6) comporte deux bras d'encliquetage (20) latéraux, qui ont l'élasticité d'un ressort et qui, dans la position insérée, logée dans l'évidement (14), sont en prise par des mentonnets d'encliquetage (22) dans des ouvertures d'encliquetage (24) de la paroi (12) de la partie de support (4), lesquelles sont agencées à côté de l'évidement (14).

5. Dispositif selon la revendication 4,
**caractérisé en ce que** chaque bras d'encliquetage (20) peut se déformer élastiquement autour de deux axes de flexion (26, 28) disposés en formant entre eux un angle, en particulier un angle à peu près droit.

6. Dispositif selon la revendication 4 ou 5,
**caractérisé en ce que** chaque bras d'encliquetage (20) est relié à l'élément de raccordement (6), transversalement à la direction d'emmanchement (18), par l'intermédiaire d'un segment de paroi (30), adapté au contour périphérique de la paroi (12) de la partie de support (4) et qui peut se déformer élastiquement autour d'un premier axe de flexion (26) qui s'étend à peu près parallèlement à l'axe longitudinal.

7. Dispositif selon la revendication 6,
**caractérisé en ce que** le segment de paroi (30), qui ferme sensiblement l'évidement à bord ouvert (14) de la paroi (12) de la partie de support (4) dans l'état emboîté, présente des renforcements en forme de nervures ou de crêtes sur son côté extérieur convexe qui est adapté à la courbure de la paroi (12).

8. Dispositif selon la revendication 6 ou 7,
**caractérisé en ce qu'**à la suite du segment de paroi correspondant, chaque bras (20) s'étend à peu près parallèlement à l'axe longitudinal, et en particulier dans la direction d'emmanchement (18), de telle manière qu'il puisse se déformer élastiquement autour d'un deuxième axe de flexion (28) qui s'étend à peu près tangentiellement à la paroi (12) de la partie de support (4).

9. Dispositif selon une des revendications 4 à 8,
**caractérisé en ce que** chaque bras d'encliquetage (20) présente une région d'étanchéité (38) qui entoure le mentonnet d'encliquetage (22) disposé à l'extrémité libre, région qui, dans l'état encliqueté avec la partie de support (4), vient en appui contre la paroi (12) de la partie de support (4), de sorte qu'on obtient une étanchéité protégeant contre les salissures dans la région des ouvertures d'encliquetage (24).

10. Dispositif selon une des revendications 1 à 9,
**caractérisé en ce que** l'élément de raccordement (6) présente, sur le côté extérieur de la partie de support (4), un coupleur (40) appartenant à un raccord de conduite ainsi que, sur le côté intérieur, un élément de branchement (42) pour une conduite tubulaire (8) menant à la jambe de suspension.

11. Dispositif selon la revendication 10,
**caractérisé en ce qu'**entre sa première extrémité destinée à être reliée à l'élément de raccordement (6) et sa deuxième extrémité qui mène à la jambe de suspension, la conduite tubulaire (8) présente un tracé circulaire, coaxial à l'axe longitudinal de la jambe de suspension avec un angle d'embrassement situé de préférence dans la plage de 360° à 720°.

12. Dispositif selon la revendication 10 ou 11,
**caractérisé en ce que** l'élément de branchement (42) de l'élément de raccordement (6) pénètre dans la région intérieure de la partie de support (4) en s'étendant à peu près tangentiellement au tracé circulaire de la conduite tubulaire (8).

13. Dispositif selon une des revendications 1 à 12,
**caractérisé en ce que** la liaison entre la partie de support (4) et l'élément de raccordement (6) est sensiblement exempte de jeu, en particulier dans la direction périphérique de la paroi (12).

14. Dispositif selon une des revendications 1 à 13,
**caractérisé en ce que** l'élément de raccordement (6) comprend au moins un élément d'arrêt (48) qui permet une fixation ou immobilisation mécanique temporaire supplémentaire pendant certaines opérations qui sollicitent l'élément de raccordement (6) avec une force.
